# EUROPEAN PATENT SPECIFICATION

(11) **EP 0 460 608 B1**
(45) Date of publication and mention of the grant of the patent: **12.04.1995**
(21) Application number: 91109122.1
(22) Date of filing: 04.06.1991
(51) Int. Cl.: D06N 3/14, C08G 18/00

(54) **Suede touch surface finishing composition**
Oberflächenbehandlungszusammensetzung, die einen wildlederartigen Griff ergibt
Composition donnant un toucher comme la peau de daim pour traiter des surfaces

(30) Priority: 06.06.1990 JP 149140/90
(43) Date of publication of application: 11.12.1991
(73) Proprietor: SEIKOH CHEMICALS CO., LTD., Nishi-ku, Kobe (JP); Ajinomoto Co., Inc., Tokyo 104 (JP)
(72) Inventor: Enomoto, Masao, Kobe (JP); Ito, Nobuo, Ikawadani-cho, Nishi-ku, Kobe (JP)
(74) Representative: Strehl Schübel-Hopf Groening & Partner

(56) References cited:
- US-A- 3 676 206
- DATABASE WPIL, accession nr. 90-244386 (32); Derwent Publications Ltd., London/GB; & KR-A-8903171 (KOLON CO.), 25 August 1989
- DATABASE WPIL, accession nr. 87-027005 (04); Derwent Publications Ltd., London/GB; & JP-A-61285268 (HONEY CHEM. IND. KK), 16 Dec. 1986
- DATABASE WPIL, accession nr. 90-211960 (28); Derwent Publications Ltd., London/GB; & JP-A-2139482 (TOYO CLOTH KK), 29 May 1990
- DATABASE WPIL, accession nr. 91-069101 (10); Derwent Publications Ltd., London/GB; & JP-A-3017154 (SEIKO KASEI KK), 25 January 1991

## Description

### INDUSTRIAL FIELD OF THE INVENTION

This invention relates to a suede touch surface finishing composition and, more particularly, to a composition used for coating therewith a surface of an artificial or synthetic leather sheet such as polyvinyl chloride leather sheet used for making bags, satchels, clothings, shoes and likes or a surface of shaped plastic product such as furniture, car interior components or casings of electric equipments to provide the surface with a gentle touch or feel of suede.

### BACKGROUND OF THE INVENTION

Many kinds of compositions have been proposed and used for this purpose and typical ones are (1) polyurethane resin composition containing fatty acid ester and silica, (2) polyurethane resin and acrylate resin composition containing dimethyl polysiloxane and silica and (3) polyurethane composition containing fine-powdered polyethylene, polyethylene fluoride, polybutylene or silicon resin and silica. Such compositions are coated on an objective surface by a gravure printing or spraying method to finish the surface to have the touch of suede.

However, the surface finished in this fashion has suffered from such problems in that the coating is easily broken or deformed by nail scratch and that finger marks may be left on the coating by hand touch. Moreover, the coating has exhibited undesirable stickiness, while it is lacking in desirable waxiness.

The DERWENT ABSTRACT No 90-244386 (32) (KR-A-8903171 (KOLON CO)) and the US-A-3676206 describe compositions comprising polyurethane resin and polyamino acid resin.

Accordingly, an object of this invention is to provide a novel and improved surface finishing composition which can form a waxy suede touch coating which is strong against nail scratch, leaves no finger mark and has no stickiness.

### SUMMARY OF THE INVENTION

According to this invention, there is provided a suede touch surface finishing composition comprising 100 parts by weight of synthetic resin containing polyurethane resin as its main ingredient, 5 to 50 parts by weight of powdered polyamino acid resin and 5 to 50 parts by weight of powdered silica, which are dissolved or dispersed in an organic solvent, wherein said polyamino acid resin is present in the form of a powder having a particle size of 60 »m or less.

The above-mentioned synthetic resin containing polyurethane as its main ingredient may include copolymers, or mixtures of polyurethane resin, polyurethane amino acid resin and polyurethane acrylate resin and the polyurethane resin may include those which are generally referred to as polyurethane, polyurethane urea resin or polyurea resin and desirably prepared by causing polyalkylene ether glycol having a molecular weight of 400 to 5,000 or polyester-polyol, poly-ε-caprolactone-polyol or polycarbonate-diol having hydroxy radicals at the ends thereof or a mixture thereof to react with organic diisocyanate and, if desired, extending the chain with a compound having two active hydrogens.

The polyamino acid resin may include acidic amino acid ω-alkyl ester N-carboxy anhydride (N-carboxy anhydride will be hereinunder referred to as "NCA") such as γ-methyl glutamate NCA, γ-ethyl glutamate NCA, γ-benzyl glutamate NCA, β-methyl aspartate NCA, β-ethyl aspartate NCA or β-benzyl aspartate NCA, or neutral amino acid NCA such as NCA of valine, norvaline, leucine, isoleucine, norleucine, phenyl alanine or methionine. Either optically active substances or racemic substances may be used and any mixture thereof may also be used.

Fine powder of the polyamino acid resin preferably used in the inventive composition may be prepared, for example, by dissolving γ-methyl-L-glutamate NCA in an organic solvent such as methylethyl ketone (MEK) which dissolves monomer of this NCA but does not dissolve polymer thereof and dropping therein a polymerization initiator having active hydrogens, such as amine compounds, alcohols or water, together with tertiary amine as a catalyst if necessary, with agitation, or by dropping a polymerization initiator in an organic solvent such as 1,2-dichloroethane (EDC) which can dissolve polymer, removing the solvent from the resultant polymer solution and then finely powdering the polymer. While the particle size of the powder can be controlled by controlling the amount of addition of the polymerization initiator, agitation speed, polymerization temperature or concentration or powdering condition, it may be 60 micrometer or less, preferably 30 micrometer or less, in this invention.

While the object of this invention can be fully attained by the above-mentioned inventive composition, this composition exhibits excellent pitch-darkness when it is coated on a black base. Moreover, it has been found that the coating is superior in anti-abrasion property and withstands a cruel processing such as hot-pressing or hot-embossing without undesirable glossing effect. However, it should be noted that imperfection may be caused by the amount of each ingredient of the composition which comes out of the specified limit. Specifically, when the amount of powdered polyamino acid resin is less than 5 parts by weight, smoothness, anti-scratch strength and pitch-darkness are insufficient and undesirable stickiness may appear. When this amount exceeds 50 parts by weight, the anti-abrasion property will be reduced undesirably. When the amount of powdered silica which serves as a frosting or matting agent is less than 5 parts by weight, no satisfactory suede touch can be obtained and, when it exceeds 50 parts by weight, the coated surface becomes whity and it undesirably whitens when folded.

In addition to the afore-mentioned gravure printing and spraying methods, the inventive composition can be applied to an objective surface by any method such as roller coating, reverse coating and doctor-knife coating.

### DESCRIPTION OF PREFERRED EMBODIMENTS

Two kinds of polyurethane solution were prepared for use in the undermentioned embodiments as follows.
[U1] 2,000 parts by weight of butylene adipate having hydroxy radicals at both ends and a mean molecular weight of 2,000 was admixed with 500 parts by weight of 4,4'-diphenylmethane diisocyanate and caused to react for three hours at 70^{o}C. Thereafter, 2,920 parts by weight of dimethylformamide (DMF) and 2,920 parts by weight of methylethylketone (MEK) were added thereto and dissolved uniformly to obtain polyurethane resin solution U1 having a viscosity of 40,000 cps at 30^{o}C.
[U2] 3,000 parts by weight of polycarbonate-diol having hydroxy radicals at both ends and a mean molecular weight of 2,000 was admixed with 524 parts by weight of 4,4'-dicyclohexylmethane diisocyanate and caused to react for two hours at 110^{o}C, and 4,200 parts by weight of toluene was then added thereto and dissolved uniformly. Thereafter, 85 parts by weight of isophorone was added thereto and caused to react at 40^{o}C and, upon completion of reaction, 4,200 parts by weight of sec-butylalcohol was added to obtain polyurethane urea resin solution U2 having a viscosity of 30,000 cps at 30^{o}C.

Three kinds of powdered polyamino acid resin or its dispersion were prepared for use with the above-mentioned polyurethane solution as follows.
[A1] 100 parts by weight of γ-methyl-L-glutamate NCA was dissolved in 900 parts by weight of MEK at 30^{o}C and 1.4 part by weight of dibutylamine was dropped and caused to react for five hours at the same temperature to obtain MEK dispersion A1 of powdered poly-γ-methyl glutamate (PMG) having a mean particle size of 15 micrometer.
[A2] 10% solution of polyamino acid resin manufactured by Ajinomoto Co. (tradename "Ajicoat A-2000") was applied onto a releasing paper and dried in a gear oven at 120^{o}C for one hour. Thereafter, the resultant PMG film was peeled off from the releasing paper and finely cut by a cutter. The resultant PMG flakes were ground into powder in a mortor with dry ice and then passed through a 200 mesh sieve to obtain powdered PMG A2.
[A3] 100 parts by weight of L-leucine-NCA (hereinunder referred to as "Leu-NCA") was dissolved in 500 parts by weight of ethylacetate at 30^{o}C and, at the same temperature, 0.15 part by weight of N,N-dimethyl-1,3-propanediamine was dropped therein and caused to react for three hours to obtain ethylacetate dispersion A3 of powdered P-Leu-NCA having a mean particle size of 10 micrometer.

Resins U1 and U2 containing polyurethane as their main ingredinet and powdered polyamino acid resins A1, A2 and A3, which were prepared as above, were admixed respectively with powdered silica manufactured by Degussa Japan Co. (tradename "OK-412") at ratios by weight as shown in Table 1 to obtain nine kinds of composition in total. Then, these compositions were added with MEK to adjust their solid component concentration to 15 percents by weight and dispersed enough by a sand mill to obtain respective surface finishing compositions. Each composition was applied onto a black PVC leather and/or ABS resin sheet at a thickness or 30 grams per square meter by a gravure printer and the coating was dried at 120^{o}C for five minutes to obtain nine specimens for embodiment and four specimens for control as shown in Table 1.

The specimens were tested for waxiness, anti-scratch strength, finger mark, stickiness, pitch darkness, Scott's abrasion, whitened fold and suede touch, respectively, and results were obtained as listed in Table 2.

**TABLE 1**

| | No. | Base Material | U1 | U2 | A1 | A2 | A3 | OK-412 |
|---|---|---|---|---|---|---|---|---|
| Embodiment | E1 | PVC leather | 100 | 0 | 20 | 0 | 0 | 30 |
| " | E2 | " | 100 | 0 | 0 | 20 | 0 | 30 |
| " | E3 | " | 0 | 100 | 20 | 0 | 0 | 40 |
| " | E4 | " | 0 | 100 | 0 | 20 | 0 | 40 |
| " | E5 | " | 100 | 0 | 20 | 0 | 0 | 30 |
| " | E6 | ABS sheet | 100 | 0 | 0 | 20 | 0 | 30 |
| " | E7 | " | 0 | 100 | 20 | 0 | 0 | 40 |
| " | E8 | " | 0 | 100 | 0 | 20 | 0 | 40 |
| " | E9 | PVC leather | 100 | 0 | 0 | 0 | 20 | 30 |
| Control | C1 | " | 100 | 0 | 0 | 0 | 0 | 30 |
| " | C2 | " | 100 | 0 | 60 | 0 | 0 | 30 |
| " | C3 | " | 100 | 0 | 20 | 0 | 0 | 0 |
| " | C4 | " | 100 | 0 | 20 | 0 | 0 | 60 |

**TABLE 2**

| No. | Waxiness | Scratch Mark | Finger Mark | Stickiness | Darkness | Scott's Abrasion | White Fold | Suede Touch |
|---|---|---|---|---|---|---|---|---|
| E1 | A | none | none | none | A | 5 | none | A |
| E2 | A | " | " | " | A | 5 | " | A |
| E3 | A | " | " | " | A | 5 | " | A |
| E4 | A | " | " | " | A | 5 | " | A |
| E5 | A | " | " | " | A | 5-4 | " | A |
| E6 | A | " | " | " | A | 5-4 | " | A |
| E7 | A | " | " | " | A | 5-4 | " | A |
| E8 | A | " | " | " | A | 5-4 | " | A |
| E9 | A | " | " | " | A | 5 | " | A |
| C1 | C | large | little | " | C | 5-4 | " | C |
| C2 | A | none | none | " | A | 3 | " | A |
| C3 | B | little | large | little | A | 3 | " | B |
| C4 | C | large | none | none | C | 2-3 | large | A |

In the column of "Waxiness" of Table 1, symbol "A" shows a gentle touch closely resembling the touch of natural leather, "B" shows a little lack of the gentle touch and "C" shows lack of the gentle touch. In the column of "Darkness", symbol "A" shows sufficient darkness and "C" shows lack of darkness. In the column of "Suede Touch", symbol "A" shows close resemblance to natural leather, "B" shows a little resemblance to natural leather and "C" shows lack of the feel of natural leather. "Scott's Abrasion" gives class values evaluated by a UF rubber tester which is a Scott's abrasion tester manufactured by Ueshima Seisakusho Co. at a testing condition of 1kg x 1,000 times x 25^{o}C.

As will be obvious from the above tables, the control C2 containing excessive amount of powdered polyamino acid resin is low in abrasive strength and the control C1 containing zero amount thereof is not only poor in sliminess, anti-scratch property and pitch-darkness, but also almost lacking in the touch of suede. In contrast, all of the embodiments of this invention not only exhibit significant improvement in sliminess, anti-scratch property, finger mark and stickiness to fully attain the aforementioned object, but also are excellent in the touch of suede, pitch-darkness, abrasive strength and anti-whitening property.

The above embodiments are provided for explanatory purpose only and do not limit the range of the invention. It should be understood that various modifications and changes can be added to these embodiments within the spirit and scope of the invention as defined in the appended claim. For example, the inventive composition can be added with polyisocyanates, as occasion demands so long as its pot life and workability permit, to improve strength of the coating.

## Claims

1. A suede touch surface finishing composition comprising 100 parts by wt. of a synthetic resin component which contains polyurethane as a main constituent, 5 to 50 parts by wt. of a polyamino acid resin, 5 to 50 parts by wt. of powdered silica and an organic solvent, wherein said polyamino acid resin is present in the form of a powder having a particle size of 60 »m (micrometer) or less.

2. A suede touch synthetic article, comprising a leather sheet, obtained by coating a substrate sheet with a surface finishing composition as defined in claim 1.

## Patentansprüche

1. Oberflächenveredelungszusammensetzung zum Erzielen eines wildlederartigen Griffs, umfassend 100 Gewichtsteile einer synthetischen Harzkomponente, welche als Hauptbestandteil Polyurethan enthält, 5 bis 50 Gewichtsteile eines Polyaminosäureharzes, 5 bis 50 Gewichtsteile pulverförmiges Siliciumdioxid und ein organisches Lösungsmittel, wobei das Polyaminosäureharz in Pulverform mit einer Teilchengröße von 60 »m (Mikrometer) oder weniger vorliegt.

2. Synthetischer Artikel mit wildlederartigem Griff, umfassend eine Lederschicht, welche durch Beschichten einer Unterlagsschicht mit der Oberflächenveredelungszusammensetzung gemäß Anspruch 1 erhalten wurde.

## Revendications

1. Composition d'apprêt de surface pour touché de tissu suédé comprenant 100 parties en masse d'un composant résine synthétique qui contient du polyuréthanne en tant que constituant principal, de 5 à 50 parties en masse d'une résine de poly(acide aminé), de 5 à 50 parties en masse de silice en poudre ainsi qu'un solvant organique, dans laquelle ladite résine de poly(acide aminé) est présente sous la forme d'une poudre ayant une dimension de particules inférieure ou égale à 60 »m (micromètre).

2. Article synthétique à touché de tissu suédé comprenant une feuille de cuir, obtenue par application sur une feuille substrat d'une composition d'apprêt de surface telle que définie dans la revendication 1.
